(19) Europäisches Patentamt
European Patent Office
Office européen des brevets

(11) **EP 3 355 034 B1**

(12) **EUROPÄISCHE PATENTSCHRIFT**

(45) Veröffentlichungstag und Bekanntmachung des Hinweises auf die Patenterteilung:
**14.08.2019 Patentblatt 2019/33**

(51) Int Cl.:
*G01D 5/347* *(2006.01)*    *G01D 5/38* *(2006.01)*

(21) Anmeldenummer: **18151547.9**

(22) Anmeldetag: **15.01.2018**

(54) **POSITIONSMESSEINRICHTUNG**

POSITION MEASURING DEVICE

DISPOSITIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2017 DE 102017201257**

(43) Veröffentlichungstag der Anmeldung:
**01.08.2018 Patentblatt 2018/31**

(73) Patentinhaber: **Dr. Johannes Heidenhain GmbH 83301 Traunreut (DE)**

(72) Erfinder:
- **HOLZAPFEL, Wolfgang 83119 Obing (DE)**
- **LINGK, Christoph 83278 Traunstein (DE)**
- **TRAUTNER, Johannes verstorben (DE)**

(56) Entgegenhaltungen:
**EP-A2- 0 350 586    EP-A2- 1 722 201
DE-A1- 3 727 188    DE-A1- 19 854 733
DE-C2- 3 210 614**

EP 3 355 034 B1

**Beschreibung**

## GEBIET DER TECHNIK

Die vorliegende Erfindung betrifft eine Positionsmesseinrichtung, die zur hochgenauen Bestimmung der Relativposition zweier Objekte geeignet ist, die relativ zueinander entlang mindestens einer Messrichtung beweglich angeordnet sind.

## STAND DER TECHNIK

Aus der Veröffentlichung von R. Pettigrew mit dem Titel "Analysis of Grating Imaging and its Application to Displacement Metrology" in SPIE Vol. 36, 1st European Congress on Optics applied to Metrology (1977), S. 325 - 332 ist eine Positionsmesseinrichtung basierend auf einem optischen 3-Gitter-Abtastprinzip bekannt. Mit Hilfe einer derartigen Positionsmesseinrichtung lassen sich phasenverschobene Inkrementalsignale bezüglich der Relativbewegung zweier Objekte erzeugen, die entlang mindestens einer Messrichtung relativ beweglich zueinander sind. Eines der beiden Objekte ist hierbei mit einer Maßverkörperung verbunden, die sich entlang der Messrichtung erstreckt und mindestens ein Maßstabsgitter umfasst. Das Maßstabsgitter besteht im Durchlichtfall aus periodisch mit einer ersten Periodizität $d_1$ entlang der Messrichtung angeordneten Maßstabsgitterbereichen mit unterschiedlichen optischen Durchlässigkeiten. Mit dem anderen Objekt ist eine Abtasteinheit verbunden, die die abtastseitigen Komponenten der Positionsmesseinrichtung umfasst. Hierzu gehören mindestens eine Lichtquelle, ein Abtastgitter sowie eine Detektoranordnung. Das Abtastgitter besteht aus periodisch mit der Periodizität $d_2$ entlang der Messrichtung angeordneten Abtastgitterbereichen mit unterschiedlichen optischen Eigenschaften. Die Detektoranordnung umfasst eine Mehrzahl von strahlungsempfindlichen Detektorbereichen, die in einer Detektionsebene periodisch mit einer dritten Periodizität $d_3$ entlang der Messrichtung angeordnet sind. Die von der Lichtquelle emittierten Strahlenbündel beaufschlagen zunächst das Maßstabsgitter und durchlaufen anschließend das Abtastgitter. Aus der Wechselwirkung der Strahlenbündel mit dem Maßstabsgitter und dem Abtastgitter resultiert in der Detektionsebene der Detektoranordnung ein periodisches Streifenmuster mit der dritten Periodizität $d_3$. Aus dessen Abtastung mit Hilfe der Detektoranordnung bzw. den periodisch angeordneten Detektorbereichen können dann mehrere phasenverschobene Inkrementalsignale erzeugt werden.

Derartige Positionsmesseinrichtungen werden beispielsweise in Anwendungen eingesetzt, in denen in einer Maschine hochgenau die Position eines beweglichen Maschinenteils gegenüber einem stationären Maschinenteil erfasst werden muss, um über eine Maschinensteuerung eine exakte Relativ-Positionierung dieser Maschinenteile vorzunehmen. Handelt es sich bei diesen Maschinen etwa um Werkzeugmaschinen, so resultieren für die optische Positionsmesseinrichtung Einsatzbedingungen, die ggf. die Funktionsfähigkeit derselbigen beeinträchtigen können. So ist es möglich, dass sich Verschmutzungen wie Kühlschmierstoffe oder Ölnebel auf optischen Komponenten der Positionsmesseinrichtung ablagern, beispielsweise auf dem Abtastgitter. Dies kann im Extremfall den Ausfall der Positionsmesseinrichtung zur Folge haben.

In der DE 32 10 614 C2 wird zum Schutz des Abtastgitters in einer vergleichbaren Abtastkonfiguration einer optischen Positionsmesseinrichtung vorgesehen, diejenige Seite des Trägerelements abgewandt zur Maßverkörperung anzuordnen, auf der das Abtastgitter angeordnet ist. Ferner ist das Abtastgitter noch mit einem lichtdurchlässigen Schutzelement überzogen. Da in dieser Positionsmesseinrichtung die Maßverkörperung das zweite beaufschlagte Gitter darstellt, können auch Verschmutzungen der Maßverkörperungs-Schutzschicht und Verschmutzungen im Zwischenraum zwischen der Maßverkörperung und dem dritten Gitter zu besonders nachteiligen Beeinträchtigungen der Signale führen.

EP 0 350 586 A2 offenbart eine ähnliche Positionsmesseinrichtung.

## ZUSAMMENFASSUNG DER ERFINDUNG

Der vorliegenden Erfindung liegt die Aufgabe zugrunde, eine Positionsmesseinrichtung basierend auf einem optischen 3-Gitter-Abtastprinzip zu schaffen, bei der ein möglichst zuverlässiger Schutz des Abtastgitters gegenüber einer eventuellen Verschmutzung sichergestellt und gleichzeitig eine gute Qualität der erzeugten Signale gewährleistet ist.

Diese Aufgabe wird erfindungsgemäß durch eine Positionsmesseinrichtung mit den Merkmalen des Anspruchs 1 gelöst.

Vorteilhafte Ausführungen der erfindungsgemäßen Positionsmesseinrichtung ergeben sich aus den Maßnahmen, die in den abhängigen Ansprüchen aufgeführt sind.

Die erfindungsgemäße Positionsmesseinrichtung zur Bestimmung der Position eines ersten Objekts gegenüber einem relativ hierzu entlang mindestens einer Messrichtung beweglichen zweiten Objekt umfasst eine sich entlang der Messrichtung erstreckenden Maßverkörperung, die mit dem ersten Objekt verbunden ist sowie eine Abtasteinheit, die mit dem zweiten Objekt verbunden ist. Auf Seiten der Maßverkörperung ist mindestens ein periodisches Maßstabsgitter vorgesehen, das als Transmissionsgitter ausgebildet ist und eine erste Periodizität $d_1$ aufweist. Die Abtasteinheit weist mindestens eine Lichtquelle, mindestens ein periodisches Abtastgitter mit einer zweiten Periodizität $d_2$ und eine Detektoranordnung auf, die aus periodisch mit einer dritten Periodizität $d_3$ entlang der Messrichtung angeordneten strahlungsempfindlichen Detektorbereichen in einer Detektionsebene besteht. Die von der Lichtquelle emittierten Strahlenbündel beaufschlagen zunächst das Maßstabsgitter, durchlaufen dann das Abtastgitter, wobei aus der Wechselwirkung der Strahlenbündel mit dem Maßstabsgitter und dem Abtastgitter in der Detektionsebene ein periodisches Streifenmuster mit der dritten Periodizität $d_3$ resultiert, aus dessen Abtastung mittels der Detektoranordnung mehrere gegeneinander phasenverschobene Inkrementalsignale erzeugbar sind. Das Abtastgitter ist zwischen mindestens einem ersten und einem zweiten transparenten, plattenförmigen Trägerelement angeordnet und der Raum zwischen dem Abtastgitter und den Detektorbereichen ist vollständig mit einem Material gefüllt ist, das einen Brechungsindex n > 1.3 aufweist. Der Abstand zwischen dem Maßstabsgitter und der benachbarten Grenzfläche des ersten Trägerelements ist im Bereich zwischen $10\mu m$ und $200\mu m$ gewählt.

Besonders vorteilhaft erweist sich, wenn der Abstand zwischen dem Maßstabsgitter und der benachbarten Grenzfläche des ersten Trägerelements im Bereich zwischen $20\mu m$ und $50\mu m$ gewählt ist.

Es ist möglich, dass die plattenförmigen Trägerelemente aus Glas ausgebildet sind.

Alternativ kann auch vorgesehen werden, dass das erste plattenförmige Trägerelement aus Glas und das zweite plattenförmige Trägerelement aus transparentem Kunststoff ausgebildet ist.

Es ist weiterhin vorteilhaft, wenn die plattenförmigen Trägerelemente mindestens eine Dicke von 0.1mm aufweisen.

Ebenfalls als günstig erweist sich, wenn die plattenförmigen Trägerelemente eine maximale Dicke von 5mm aufweisen.

In einer möglichen Ausführungsform kann das Abtastgitter auf einer der beiden einander zugewandten Grenzflächen der beiden Trägerelemente angeordnet sein.

Dabei kann das Abtastgitter als Amplitudengitter ausgebildet sein und Abtastgitterbereiche mit unterschiedlichen optischen Durchlässigkeiten aufweisen.

Alternativ hierzu kann das Abtastgitter auch als Phasengitter ausgebildet sein und Abtastgitterbereiche mit unterschiedlichen optischen Phasenhüben aufweisen.

Es ist ferner möglich, dass für die erste Periodizität des Maßstabsgitters und die dritte Periodizität des resultierenden Streifenmusters in der Detektionsebene die Beziehungen

$$d_1 = d_2 \cdot ((u_1 + u_2/n_{u2}) + v/n_v) \, / \, (v/n_v)$$

$$d_3 = d_2 \cdot ((u_1 + u_2/n_{u2}) + v/n_v) \, / \, (u_1 + u_2/n_{u2})$$

gelten, mit

$d_1$ := erste Periodizität des Maßstabsgitters
$d_2$ := effektive, zweite Periodizität des Abtastgitters
$d_3$ := dritte Periodizität des in der Detektionsebene resultierenden Streifenmusters
$u_1$ := Abstand zwischen Maßstabsgitter und benachbarter Grenzfläche des ersten Trägerelements
$u_2$ := Dicke des ersten Trägerelements, platziert zwischen Maßstabsgitter und Abtastgitter
$v$ := Dicke des zweiten Trägerelements, platziert zwischen Abtastgitter und Detektionsebene
$n_{u2}$ := Brechungsindex des ersten Trägerelements
$n_v$ := Brechungsindex des zweiten Trägerelements

Über die erfindungsgemäßen Maßnahmen ist nunmehr ein zuverlässiger Schutz des Abtastgitters in der Positionsmesseinrichtung gegenüber Verschmutzungen gewährleistet. Hierbei ist zum einen die Oberfläche des Abtastgitters vor einer Verschmutzung durch Flüssigkeiten geschützt; zum anderen kann auch der Zwischenraum zwischen dem Abtastgitter und der Detektionsebene zuverlässig vor derartigen Verschmutzungen geschützt werden. Die Empfindlichkeit der optischen Abtastung gegenüber möglichen Verschmutzungen des Abtastgitters wird dadurch deutlich verringert. Es resultiert eine höhere Verfügbarkeit der optischen Positionsmesseinrichtung auch unter ungünstigen Bedingungen.

Desweiteren ermöglichen die erfindungsgemäßen Maßnahmen, dass ein sehr kleiner Abstand zwischen den einander gegenüberliegenden Grenzflächen der Maßverkörperung und der Abtasteinheit realisierbar ist. Eventuell auf der Oberfläche der Maßverkörperung befindliche Flüssigkeitstropfen können aufgrund des geringen Abstands plattgedrückt werden und beeinträchtigen die optische Abtastung und Signalerzeugung nicht mehr negativ.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

**KURZE BESCHREIBUNG DER ZEICHNUNGEN**

Es zeigt

Figur 1        eine schematisierte Schnittansicht eines Ausführungsbeispiels der erfindungsgemäßen Positionsmesseinrichtung;

Figur 2a       eine Draufsicht auf die Maßverkörperung des Ausführungsbeispiels aus Figur 2;

Figur 2b       eine Draufsicht auf die Abtastplatte des Ausführungsbeispiels aus Figur 2;

Figur 2c       eine Draufsicht auf die Detektoreinrichtung des Ausführungsbeispiels aus Figur 2;

Figur 3        eine schematisierte Darstellung des Strahlengangs in der erfindungsgemäßen Positionsmesseinrichtung inclusive verschiedener Systemparameter;

Figur 4        eine vergrößerte Teilansicht der Abtasteinheit des Ausführungsbeispiels aus Figur 1;

Figur 5a, 5b   jeweils Teilansichten der Abtasteinheit in unterschiedlichen Varianten der erfindungsgemäßen Positionsmesseinrichtung.

**BESCHREIBUNG DER AUSFÜHRUNGSFORMEN**

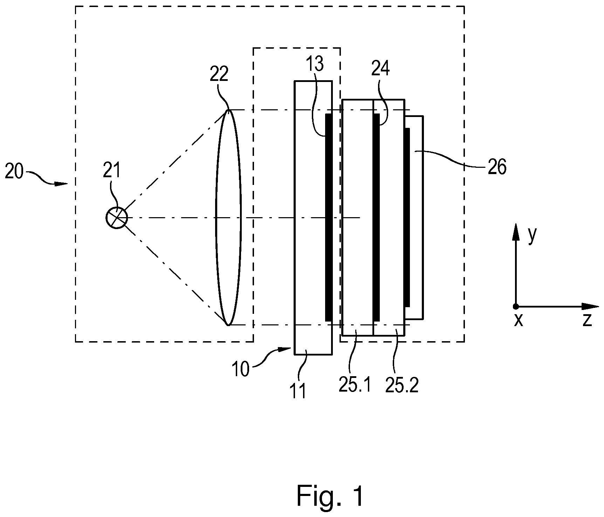

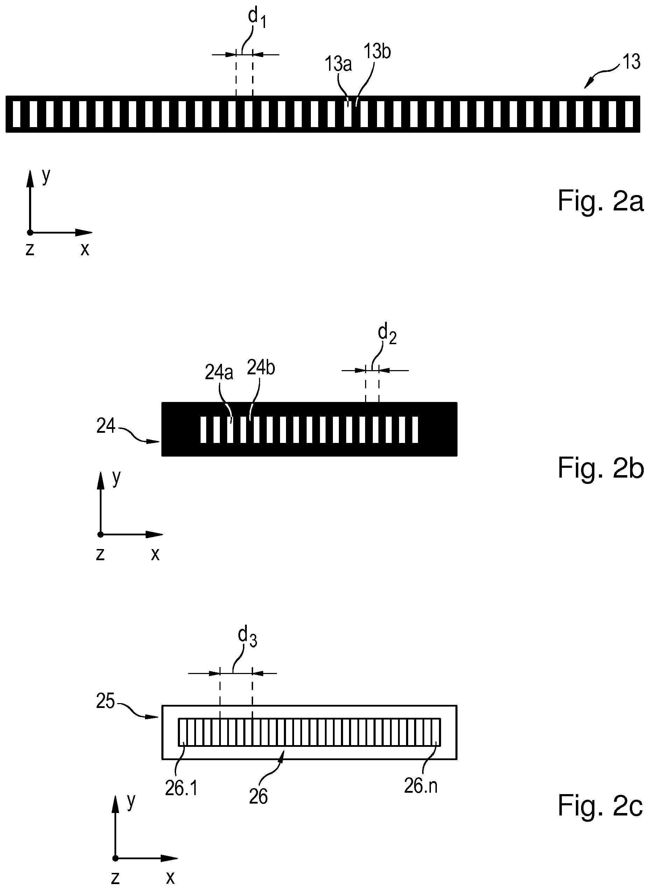

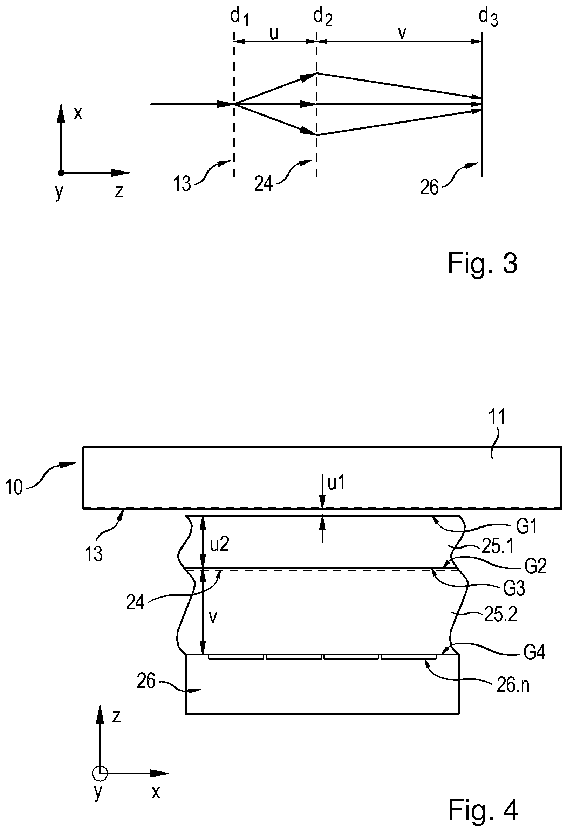

Ein Ausführungsbeispiel der erfindungsgemäßen optischen Positionsmesseinrichtung sei nachfolgend anhand der Figuren 1, 2a - 2c und 3 erläutert. Hierbei zeigt Figur 1 eine schematisierte Schnittansicht, die Figuren 2a - 2c Draufsichten auf die Maßverkörperung, die Abtastplatte und die Detektoreinrichtung, Figur 3 eine Darstellung des prinzipiellen Strahlengangs zur Signalerzeugung inklusive diverser Systemparameter und Figur 4 eine vergrößerte Teilansicht der Abtasteinheit.

Die in diesen Figuren dargestellte optische Positionsmesseinrichtung umfasst zum einen eine Maßverkörperung 10, die sich entlang einer Messrichtung x erstreckt und ein periodisches Maßstabsgitter 13 mit einer ersten Periodizität $d_1$ aufweist. Zum anderen ist gegenüber der Maßverkörperung 10 relativ beweglich entlang der Messrichtung x eine Abtasteinheit 20 vorgesehen. Die Abtasteinheit 20 weist zumindest eine Lichtquelle 21, ein periodisches Abtastgitter 24 mit einer zweiten Periodizität $d_2$ sowie eine Detektoranordnung 26 auf. Im vorliegenden Ausführungsbeispiel ist die Messrichtung x linear orientiert, d.h. Maßverkörperung 10 und Abtasteinheit 20 sind relativ zueinander linear beweglich. Die Detektoranordnung 26 besteht aus periodisch mit einer dritten Periodizität $d_3$ in einer Detektionsebene entlang der Messrichtung x angeordneten strahlungsempfindlichen Detektorbereichen 26.1 - 26.n. Im vorliegenden Ausführungsbeispiel ist der Lichtquelle 21 ferner eine Kollimationsoptik 22 vorgeordnet, über die die von der Lichtquelle 21 emittierte Strahlung kollimiert wird, bevor diese auf das Maßstabsgitter auftrifft; eine derartige Kollimationsoptik ist jedoch nicht zwingend für die vorliegende Erfindung erforderlich.

Maßverkörperung 10 und Abtasteinheit 20 der erfindungsgemäßen optischen Positionsmesseinrichtung sind üblicherweise mit Objekten in Form von Maschinenkomponenten verbunden, die entlang der Messrichtung x relativ zueinander beweglich sind. Aus den mit Hilfe der erfindungsgemäßen Positionsmesseinrichtung erzeugten phasenverschobenen Inkrementalsignalen lässt sich in einer - nicht dargestellten - Maschinen-Steuereinheit die Relativposition der Abtasteinheit 20 entlang der Messrichtung x gegenüber der Maßverkörperung 10 und damit die Relativposition der zueinander verschiebbaren Objekte bestimmen und zur Steuerung der beweglichen Maschinenkomponenten nutzen.

Die erfindungsgemäße optische Positionsmesseinrichtung ist im dargestellten Ausführungsbeispiel als Durchlichtsystem ausgebildet. Als periodisches Maßstabsgitter 13, von dem in Figur 2a eine Teil-Draufsicht gezeigt ist, fungiert ein Transmissionsgitter, das auf einem Maßverkörperungsträger 11, beispielsweise einer Glaslamelle, angeordnet ist. Das Maßstabsgitter 13 weist entlang der Messrichtung x mit der ersten Periodizität $d_1$ alternierend angeordnete Maßstabsgitterbereiche 13a, 13b mit unterschiedlichen Transmissionseigenschaften auf, d.h. das Maßstabsgitter 13 ist als Amplitudengitter ausgebildet. Vorliegend sind die schwarz dargestellten Maßstabsgitterbereiche 13b in Figur2a undurchlässig ausgebildet und die hell dargestellten Maßstabsgitterbereiche 13a durchlässig.

Zur Erzeugung der verschiebungsabhängigen Inkrementalsignale wird in der erfindungsgemäßen optischen Positionsmesseinrichtung ein Drei-Gitter-Abtastprinzip genutzt, wie es aus der eingangs erwähnten Veröffentlichung von R. Pettigrew mit dem Titel "Analysis of Grating Imaging and its Application to Displacement Metrology" in SPIE Vol. 36, 1st European Congress on Optics applied to Metrology (1977), S. 325 - 33 bekannt ist und dessen prinzipieller Abtaststrahlengang in Figur 3 skizziert ist. Dabei stellt das periodische Maßstabsgitter 13 das erste Gitter im Abtaststrahlengang dar, das von dem von der Lichtquelle 21 emittierten Strahlenbündel beleuchtet wird. Das Maßstabsgitter 13 besitzt die erste Periodizität $d_1$, welche wie in Figur 2a veranschaulicht die Summe der Breiten aufeinanderfolgend angeordneter durchlässiger und undurchlässiger Bereiche 13a, 13b in Messrichtung x angibt. Als zweites beaufschlagtes Gitter im Abtaststrahlengang fungiert das Abtastgitter 24 in der Abtasteinheit 20, das im bekannten Aufbau gemäß der vorgenannten Veröffentlichung im Normalen-Abstand u in Strahlausbreitungsrichtung beabstandet vom Maßstabsgitter 13 angeordnet ist. Das vorliegend als Amplitudengitter ausgebildete Abtastgitter 24 besitzt die zweite Periodizität $d_2$, welche gemäß Figur 2b die Summe der Breiten aufeinanderfolgend angeordneter durchlässiger und undurchlässiger Bereiche 24a, 24b im Abtastgitter 24 in Messrichtung x angibt. Das dritte und letzte Gitter im Abtaststrahlengang stellt schließlich die Detektoranordnung 26 dar, die als strukturierter Detektor ausgebildet ist und aus einer Vielzahl rechteckförmiger, strahlungsempfindlicher Detektorbereiche 26.1 - 26.n in der Detektionsebene besteht, wie dies in Figur 2c veranschaulicht ist. In der Detektionsebene sind die n Detektorbereiche 26.1 - 26.n periodisch mit der dritten Periodizität $d_3$ entlang der Messrichtung x angeordnet; die Periodizität $d_3$ entspricht im vorliegenden Ausführungsbeispiel der Breite von 4 aufeinanderfolgend angeordneten Detektorbereichen 26.1 - 26.n entlang der Messrichtung x; mit Hilfe der Detektoranordnung 26 erfolgt somit die Erzeugung von vier, um jeweils 90° zueinander phasenverschobenen Inkrementalsignalen. Die Detektionsebene der Detektoranordnung 26 ist in Strahlausbreitungsrichtung im bekannten Aufbau gemäß der vorgenannten Veröffentlichung im Normalen-Abstand v beabstandet vom Abtastgitter 24 angeordnet, wie dies in Figur 3 schematisch veranschaulicht ist.

In der Detektionsebene bzw. auf der Detektoranordnung 26 resultiert bei dieser Abtastung aus der Wechselwirkung der von der Lichtquelle 21 emittierten Strahlenbündel mit dem Maßstabsgitter 13 und dem Abtastgitter 24 ein periodisches Streifenmuster, wobei das Streifenmuster die Periodizität $d_3$ aufweist. Aus der vorstehend genannten Veröffentlichung sind die in den folgenden Gleichungen 1) und 2) aufgeführten Zusammenhänge zwischen der Periodizität $d_3$ des Streifenmusters bzw. der Periodizität des Maßstabgitters 13 und anderen geometrischen Systemparametern in Positionsmesseinrichtungen basierend auf diesem Abtastprinzip bekannt; diese Beziehungen gelten hierbei für den Fall eines genutzten Abtastgitters 14 in Form eines Amplitudengitters oder eines Phasengitters mit näherungsweise 90° Phasenhub:

$$d_3 = d_2 \cdot \frac{u+v}{u} \qquad \text{(Gl. 1)}$$

$$d_1 = d_2 \cdot \frac{u+v}{v} \qquad \text{(Gl. 2)}$$

mit:

$d_1 :=$    Periodizität des Maßstabsgitters auf der Maßverkörperung
$d_2 :=$    effektive Periode des Abtastgitters
$d_3 :=$    Periodizität des Streifenmusters in der Detektionsebene der Detektoranordnung
$v :=$    Normalen-Abstand zwischen Abtastgitter und Detektionsebene
$u :=$    Normalen-Abstand zwischen Maßstabsgitter und Abtastgitter

Wird ein Abtastgitter 14 in Form eines Phasengitters mit 180° Phasenhub verwendet, so stellt in diesen Gleichungen die Periodizität $d_2$ die effektive Teilungsperiode dar, die durch $d_2 = 2 \cdot d_{2P}$ gegeben ist, wobei $d_{2P}$ die tatsächliche Periodizität des Phasengitters angibt.

Im Fall einer Relativbewegung von Maßverkörperung 10 und Abtasteinheit 20 und damit einer Relativbewegung des Maßstabgitters 13 gegenüber dem Abtastgitter 14 und der Detektoranordnung 26 wandert das erzeugte Streifenmuster in der Detektionsebene entlang der Messrichtung x über die Detektoranordnung 26. Mit Hilfe der Vielzahl von Detektorbereichen 26.1 - 26.n der Detektoranordnung 26 lassen sich derart in bekannter Art und Weise mehrere zueinander phasenverschobene, sinusförmige Inkrementalsignale erzeugen, beispielsweise drei um 120° zueinander phasenverschobene Inkrementalsignale oder aber vier um jeweils 90° zueinander phasenverschobene Inkrementalsignale, welche dann z.B. von der Maschinen-Steuerung weiterverarbeitbar sind.

Der aus der vorgenannten Veröffentlichung bekannte Aufbau wird in der erfindungsgemäßen Positionsmesseinrichtung nunmehr modifiziert, um insbesondere eine Verschmutzung des Abtastgitters 24 und damit eine Beeinträchtigung der Signalqualität zu vermeiden. Wie aus Figur 1 ersichtlich, ist hierzu das Abtastgitter 24 zwischen einem ersten und einem zweiten transparenten, plattenförmigen Trägerelement 25.1, 25.2 angeordnet. Als Trägerelemente 25.1, 25.2 können dabei z.B. Glasplatten mit einer geeigneten Dicke und einem geeigneten Brechungsindex n verwendet werden.

Vorzugsweise wird die Dicke der plattenförmigen Trägerelemente 25.1, 25.2 im Bereich zwischen 0.1mm und 5 mm gewählt. Ferner ist vorgesehen, dass der Raum zwischen dem Abtastgitter 24 und den Detektorbereichen 26.1 - 26.n vollständig mit einem Material gefüllt ist, das einen Brechungsindex n > 1.3 aufweist. Im vorliegenden Ausführungsbeispiel ist dieser Raum wie in Figur 1 gezeigt mit dem zweiten Trägerelement 25.2 gefüllt.

In Figur 4 ist eine vergrößerte Teilansicht der Abtasteinheit 20 aus Figur 1 gezeigt, in der zudem wichtige geometrische Größen der erfindungsgemäßen Positionsmesseinrichtung eingezeichnet sind, auf die nachfolgend noch eingegangen wird. So ist aus Figur 4 ersichtlich, dass aufgrund des modifizierten Aufbaus der Abtasteinheit 20 in den oben erwähnten Gleichungen 1) und 2) der Normalen-Abstand u zwischen dem Maßstabsgitter 13 und dem Abtastgitter 24 durch den Ausdruck $u_1 + u_2/n_{u2}$ und der Normalen-Abstand v zwischen dem Abtastgitter 24 und der Detektionsebene durch den Ausdruck $v/n_v$ ersetzt werden muss. Hierbei stellen $n_{u2}$ bzw. $n_v$ die Brechungsindizes der beiden Trägerelemente 25.1, 25.2 dar, die nunmehr berücksichtigt werden müssen. Es ergeben sich dann die gegenüber den obigen Gleichungen 1) und 2) modifizierten Beziehungen 1.1) bzw. 2.1) für die erste Periodizität $d_1$ des Maßstabsgitters und die dritte Periodizität $d_3$ des resultierenden Streifenmusters in der Detektionsebene:

$$d_1 = d_2 \cdot ((u_1 + u_2/n_{u2}) + v/n_v) / (v/n_v) \qquad \text{(Gl. 1.1)}$$

$$d_3 = d_2 \cdot ((u_1 + u_2/n_{u2}) + v/n_v) / (u_1 + u_2/n_{u2}) \qquad \text{(Gl. 2.1)}$$

mit

$d_1 :=$     erste Periodizität des Maßstabsgitters
$d_2 :=$     effektive, zweite Periodizität des Abtastgitters
$d_3 :=$     dritte Periodizität des in der Detektionsebene resultierenden Streifenmusters
$u_1 :=$     Abstand zwischen Maßstabsgitter und benachbarter Grenzfläche des ersten Trägerelements
$u_2 :=$     Dicke des ersten Trägerelements, platziert zwischen Maßstabsgitter und Abtastgitter
$v :=$     Dicke des zweiten Trägerelements, platziert zwischen Abtastgitter und Detektionsebene
$n_{u2} :=$     Brechungsindex des ersten Trägerelements
$n_v :=$     Brechungsindex des zweiten Trägerelements

Über eine derartige Anordnung des Abtastgitters 24 auf einer der beiden einander zugewandten Grenzflächen G2, G3 der Trägerelemente 25.1, 25.2 ist dieses zuverlässig gegenüber eventuellen Verschmutzungen geschützt, da z.B. Flüssigkeiten nicht auf das Abtastgitter 24 gelangen können.

Unerwünschte verschmutzungsbedingte Beeinträchtigungen der Qualität der erzeugten Inkrementalsignale können dadurch vermieden werden.

Desweiteren ist durch das vollständige Ausfüllen des Raums zwischen dem Abtastgitter 24 und der Detektoranordnung 26 mit dem zweiten Trägerelement 25.2 sichergestellt, dass auch dieser Bereich nicht durch Flüssigkeiten verschmutzt und derart die Abtastung beeinträchtigt wird. Zudem kann über die Dicke des zweiten Trägerelements 25.2 der erforderliche Abstand v zwischen dem Abtastgitter 24 und der Detektionsebene sehr präzise und reproduzierbar eingestellt werden.

Das Abtastgitter 24 kann hierbei entweder auf dem in Strahlausbreitungsrichtung zuerst durchlaufenem, ersten Trägerelement 25.1 oder aber auf dem zweiten Trägerelement 25.2 aufgebracht bzw. angeordnet werden, nämlich auf einer beiden einander zugewandten Grenzflächen G2 oder G3 der Trägerelemente 25.1, 25.2. Das jeweils andere Trägerelement 25.2 bzw. 25.1 wird dann im Anschluss mit dem Trägerelement 25.1, 25.2 verklebt, auf dem das Abtastgitter 24 angeordnet ist. Der entsprechende Stapel aus den beiden verklebten Trägerelementen 25.1, 25.2 und innenliegendem Abtastgitter 24 mit der resultierenden Dicke $v + u_2$ kann anschließend auf die Detektoranordnung 26 aufgeklebt werden. Die dann vorliegende Einheit aus Detektoranordnung 26 und Trägerelement-Stapel mit Abtastgitter 24 kann dann im gewünschten Abstand $u_1$ zum Maßstabsgitter 13 montiert werden.

In den Gleichungen 1.1) und 2.1) wären in diesem Fall dann natürlich noch jeweils die Dicke und der Brechungsindex der Kleberschicht zwischen den Trägerelementen 25.1, 25.2 bzw. zwischen den Grenzflächen G2 und G3 sowie der Kleberschicht zwischen dem Trägerelement 25.2 und der Detektoranordnung 26 bzw. zwischen der Grenzfläche G4 und der Detektoranordnung 26 zu berücksichtigen.

Es erweist sich ferner als vorteilhaft, wenn in der erfindungsgemäßen Positionsmesseinrichtung der Abstand $u_1$ zwischen dem Maßstabsgitter 13 und der benachbarten Grenzfläche G1 des ersten im Strahlverlauf beaufschlagten Trägerelements 25.1 im Bereich zwischen $10\mu m$ und $200\mu m$ gewählt wird, insbesondere im Bereich zwischen $20\mu m$ und $50\mu m$. Ein solchermaßen gewählter, kleiner Abstand $u_1$ hat zur Folge, dass eventuell auf der Oberfläche der Maßverkörperung 10 befindliche Flüssigkeitströpfchen plattgedrückt werden und damit die optische Abtastung nicht mehr beeinträchtigen können. Die Wahl eines derart kleinen Abstands $u_1$ wäre für ein derartiges Abtastprinzip im Fall von $u_2 = 0$ unter Verwendung der oben diskutierten Beziehungen 1) und 2) aus der entsprechenden Veröffentlichung nur unter Inkaufnahme einer verminderten Signalqualität möglich, wenn nicht die erfindungsgemäße Anordnung des Abtastgitters 24 zwischen den mindestens zwei Trägerelementen 25.1, 25.2 mit $u_2 > 0$ vorgesehen wäre.

In einem konkreten Ausführungsbeispiel der erfindungsgemäßen Positionsmesseinrichtung werden die verschiedenen geometrischen Systemparameter folgendermaßen gewählt:

$d_1 = 20\mu m$
$d_2 = 16\mu m$
$d_3 = 80\mu m$
$\lambda = 850nm$ (Wellenlänge der verwendeten Lichtquelle)
$u_1 = 0.033mm$
$u_2 = 0.514mm; n_{u2} = 1.5$
$v = 2.256mm; n_v = 1.5$

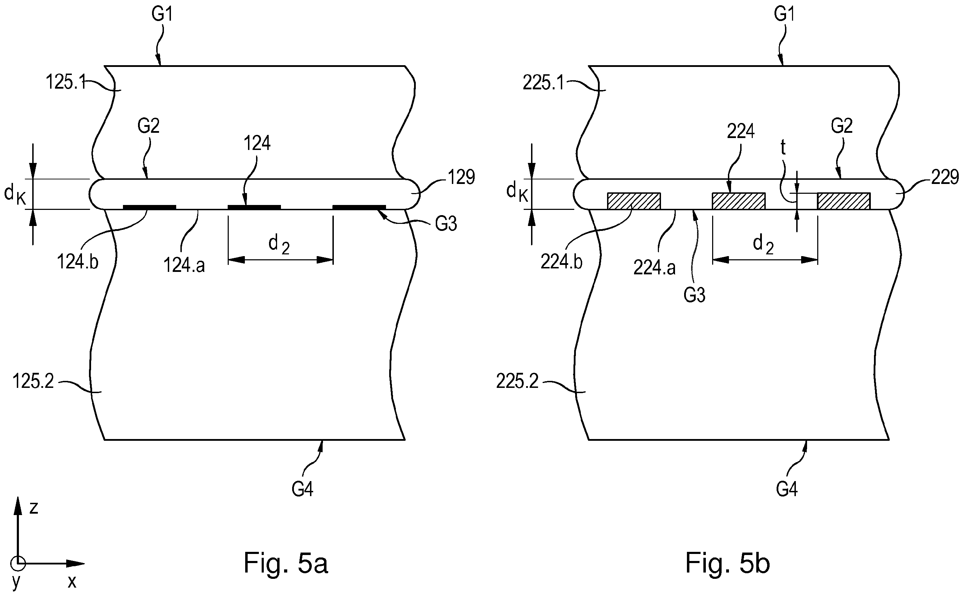

Abschließend seien anhand der Figuren 5a und 5b Varianten der erfindungsgemäßen Positionsmesseinrichtung erläutert, wobei die Figuren jeweils Detail-Ansichten von zwei miteinander verklebten Trägerelementen zeigen, zwischen denen unterschiedlich ausgebildete Abtastgitter angeordnet sind.

In Figur 5a ist hierbei nochmals der prinzipiell identische Aufbau zum vorstehenden Ausführungsbeispiel gezeigt, bei dem zwischen den beiden als Trägerelementen 125.1, 125.2 fungierenden Glasplatten das als Amplitudengitter ausgebildete Abtastgitter 124 angeordnet ist; dieses besteht aus alternierend entlang der Messrichtung x angeordneten Abtastgitterbereichen 124.a, 124.b mit unterschiedlichen optischen Durchlässigkeiten. Mit dem Bezugszeichen 124.a sind dabei die durchlässigen Abtastgitterbereiche bezeichnet; mit dem Bezugszeichen 124.b die undurchlässigen Abtastgitterbereiche, die beispielsweise als dünne Chrom-Schicht ausgebildet sind. Die Periodizität $d_2$ des Abtastgitters 124 entspricht wiederum der Summe der Breiten der zweier Abtastgitterbereiche 124.a, 124.b mit unterschiedlichen Transmissionseigenschaften entlang der Messrichtung x. Wie ebenfalls aus Figur 5a ersichtlich, ist das Abtastgitter 124 hier auf der Grenzfläche G3 des zweiten Trägerelements 125.2 angeordnet, die dem ersten Trägerelement 125.1 zugewandt ist. Zusätzlich erkennbar ist in dieser Figur ferner die Kleberschicht 129 mit der Dicke $d_K$ zwischen den beiden Trägerelementen 125.1, 125.2, über die die beiden Trägerelemente 125.1, 125.2 miteinander verbunden werden.

Figur 5b zeigt eine demgegenüber nochmals modifizierte Variante für einen möglichen Aufbau in der erfindungsgemäßen Positionsmesseinrichtung. Das Abtastgitter 224 zwischen den beiden Trägerelementen 225.1, 225.2 ist hier als Phasengitter ausgebildet und besteht aus alternierend entlang der Messrichtung x angeordneten Abtastgitterbereichen 224.a, 224.b mit unterschiedlichen optischen Phasenhüben und damit unterschiedlichen phasenschiebenden Wirkungen. In den Abtastgitterbereichen 224.b sind hierzu auf der Grenzfläche G3 des zweiten Trägerelements 225.2 Phasenstege mit der Steghöhe t aus einem vorzugsweise hochbrechenden Material wie z.B. $Ta_2O_5$ angeordnet, die Abtastgitterbereiche 224.a werden durch entsprechende Lücken ohne Phasenstege ausgebildet. Über eine Kleberschicht 229 mit der Dicke $d_K$ sind die beiden Trägerelemente 225.1, 225.2 miteinander verbunden. Hierbei muss die Dicke $d_K$ der Kleberschicht 229 größer als die Steghöhe t der Phasenstege bzw. Abtastgitterbereiche 224.b gewählt werden. Entscheidend für die Wahl des Phasensteg-Materials ist ferner, dass dieses einen Brechungsindex aufweist, der möglichst deutlich größer als der Brechungsindex der Kleberschicht 229 zwischen den beiden Trägerelementen 225.1, 225.2 ist. Bei der Wahl der Steghöhe der Phasenstege muss natürlich der Brechungsindex der Kleberschicht 229 berücksichtigt werden, um den gewünschten optischen Phasenhub des Abtastgitters zu erzielen. Die Periodizität $d_2$ des Abtastgitters 224 entspricht wiederum der Summe der Breiten zweier Abtastgitterbereiche 224.a, 224.b mit unterschiedlichen phasenschiebenden Wirkungen entlang der Messrichtung x. Besonders vorteilhaft erweist sich die erfindungsgemäße Anordnung eines als Phasengitter ausgebildeten Abtastgitters 224 zwischen den beiden Trägerelementen 225.1, 225.2; so kann darüber sichergestellt werden, dass sich keine Flüssigkeit in den Abtastgitterbereichen 224.a ohne Phasenstege ansammelt und dabei die optische Wirkung des Abtastgitters 224 unerwünscht beeinträchtigt.

Neben den konkret beschriebenen Ausführungsbeispielen existieren im Rahmen der vorliegenden Erfindung selbstverständlich noch weitere Ausgestaltungsmöglichkeiten.

So ist beispielsweise möglich, anstelle von Glas als Material für die Trägerelemente auch geeignete transparente Kunststoffe oder Glaskeramiken mit passendem Brechungsindex einzusetzen. Möglich wäre hierbei etwa auch eine Kombination eines ersten, der Maßverkörperung zugewandten Trägerelements aus Glas und einem zweiten Trägerelement aus Kunststoff. Hierbei gewährleistet das erste Trägerelement aus Glas einen guten Schutz gegen eventuelles Verkratzen durch Metallspäne und/oder gegen chemische Angriffe durch Kühlschmiermittel. Das zweite Trägerelement aus Kunststoff kann sehr günstig hergestellt werden und befindet sich geschützt zwischen dem ersten Trägerelement aus Glas und der Detektoranordnung. Die außenliegenden Kanten des zweiten Trägerelements aus Kunststoff können dabei zusätzlich durch geeignete Vergussmassen gegenüber chemischen Angriffen geschützt werden.

Ferner könnten im Bedarfsfall auch Aufbauten mit mehr als nur zwei stapelförmig angeordneten Trägerelementen vorgesehen werden.

Desweiteren können natürlich nicht nur Positionsmesseinrichtungen zur Erfassung linearer Relativbewegungen erfindungsgemäß ausgebildet werden; auch in rotatorischen Positionsmesseinrichtungen ist es möglich, entsprechend ausgebildete Abtasteinheiten vorzusehen usw..

**Patentansprüche**

1. Positionsmesseinrichtung zur Bestimmung der Position eines ersten Objekts gegenüber einem relativ hierzu entlang mindestens einer Messrichtung (x) beweglichen zweiten Objekt mit

   - einer sich entlang der Messrichtung (x) erstreckenden Maßverkörperung (10), die mit dem ersten Objekt verbunden ist und mindestens ein periodisches Maßstabsgitter (13) umfasst, das als Transmissionsgitter ausgebildet ist und eine erste Periodizität ($d_1$) aufweist, und
   - einer Abtasteinheit (20), die mit dem zweiten Objekt verbunden ist mit

     - mindestens einer Lichtquelle (21),
     - mindestens einem periodischen Abtastgitter (24; 124; 224), das eine zweite Periodizität ($d_2$) aufweist, und
     - einer Detektoranordnung (26), die aus periodisch mit einer dritten Periodizität ($d_3$) entlang der Messrichtung (x) angeordneten strahlungsempfindlichen Detektorbereichen (26.1 - 26.n) in einer Detektionsebene besteht, und

   - wobei die von der Lichtquelle (21) emittierten Strahlenbündel zunächst das Maßstabsgitter (13) beaufschlagen, dann das Abtastgitter (24; 124; 224) durchlaufen und aus der Wechselwirkung der Strahlenbündel mit dem Maßstabsgitter (13) und dem Abtastgitter (24; 124; 224) in der Detektionsebene ein periodisches Streifenmuster mit der dritten Periodizität ($d_3$) resultiert, aus dessen Abtastung mittels der Detektoranordnung (26) mehrere gegeneinander phasenverschobene Inkrementalsignale erzeugbar sind, und
   - wobei das Abtastgitter (24; 124; 224) zwischen mindestens einem ersten und einem zweiten transparenten, plattenförmigen Trägerelement (25.1, 25.2; 125.1, 125.2; 225.1, 225.2) angeordnet und der Raum zwischen dem Abtastgitter (24; 124; 224) und den Detektorbereichen (26.1 - 26.n) vollständig mit einem Material gefüllt ist, das einen Brechungsindex n > 1.3 aufweist, und
   - wobei der Abstand ($u_1$) zwischen dem Maßstabsgitter (13) und der benachbarten Grenzfläche (G1) des ersten Trägerelements (25.1) im Bereich zwischen $10\,\mu m$ und $200\,\mu m$ gewählt ist.

2. Positionsmesseinrichtung nach Anspruch 1, wobei der Abstand ($u_1$) zwischen dem Maßstabsgitter (13) und der benachbarten Grenzfläche (G1) des ersten Trägerelements (25.1) im Bereich zwischen $20\,\mu m$ und $50\,\mu m$ gewählt ist.

3. Positionsmesseinrichtung nach Anspruch 1, wobei die plattenförmigen Trägerelemente (25.1, 25.2; 125.1, 125.2; 225.1, 225.2) aus Glas ausgebildet sind.

4. Positionsmesseinrichtung nach Anspruch 1, wobei das erste plattenförmige Trägerelement aus Glas und das zweite plattenförmige Trägerelement aus transparentem Kunststoff ausgebildet ist.

5. Positionsmesseinrichtung nach Anspruch 1, wobei die plattenförmigen Trägerelemente (25.1, 25.2; 125.1, 125.2; 225.1, 225.2) mindestens eine Dicke von 0.1mm aufweisen.

6. Positionsmesseinrichtung nach Anspruch 1, wobei die plattenförmigen Trägerelemente (25.1, 25.2; 125.1, 125.2; 225.1, 225.2) eine maximale Dicke von 5mm aufweisen.

7. Positionsmesseinrichtung nach mindestens einem der vorhergehenden Ansprüche, wobei das Abtastgitter (24; 124; 224) auf einer der beiden einander zugewandten Grenzflächen (G2, G3) der beiden Trägerelemente (25.1, 25.2; 125.1, 125.2; 225.1, 225.2) angeordnet ist.

8. Positionsmesseinrichtung nach Anspruch 7, wobei das Abtastgitter (24; 124) als Amplitudengitter ausgebildet ist und Abtastgitterbereiche (24a, 24b; 124.a, 124.b) mit unterschiedlichen optischen Durchlässigkeiten aufweist.

9. Positionsmesseinrichtung nach Anspruch 7, wobei das Abtastgitter (224) als Phasengitter ausgebildet ist und Abtastgitterbereiche (224.a, 224.8) mit unterschiedlichen optischen Phasenhüben aufweist.

10. Positionsmesseinrichtung nach mindestens einem der vorhergehenden Ansprüche, wobei für die erste Periodizität ($d_1$) des Maßstabsgitters (13) und die dritte Periodizität ($d_3$) des resultierenden Streifenmusters in der Detektionsebene die Beziehungen

$$d_1 = d_2 \cdot ((u_1 + u_2/n_{u2}) + v/n_v) / (v/n_v)$$

$$d_3 = d_2 \cdot ((u_1 + u_2/n_{u2}) + v/n_v) / (u_1 + u_2/n_{u2})$$

gelten, mit

$d_1$ := erste Periodizität des Maßstabsgitters
$d_2$ := effektive, zweite Periodizität des Abtastgitters
$d_3$ := dritte Periodizität des in der Detektionsebene resultierenden Streifenmusters
$u_1$ := Abstand zwischen Maßstabsgitter und benachbarter Grenzfläche des ersten Trägerelements
$u_2$ := Dicke des ersten Trägerelements, platziert zwischen Maßstabsgitter und Abtastgitter
$v$ := Dicke des zweiten Trägerelements, platziert zwischen Abtastgitter und Detektionsebene
$n_{u2}$ := Brechungsindex des ersten Trägerelements
$n_v$ := Brechungsindex des zweiten Trägerelements

**Claims**

1. Position measuring device for determining the position of a first object in relation to a second object movable relative thereto along at least one measuring direction (x), comprising

- a material measure (10) that extends along the measuring direction (x), is connected to the first object and comprises at least one periodic scale grating (13), which is embodied as a transmission grating and has a first periodicity ($d_1$), and
- a scanning unit (20), connected to the second object, comprising

  - at least one light source (21),
  - at least one periodic scanning grating (24; 124; 224) having a second periodicity ($d_2$), and
  - a detector arrangement (26) consisting of radiation sensitive detector regions (26.1 - 26.n) in a detection plane, said detector arrangement being arranged periodically along the measuring direction (x) with a third periodicity ($d_3$), and

- wherein the beams emitted by the light source (21) initially impinge on the scale grating (13), then pass through the scanning grating (24; 124; 224) and a periodic fringe pattern with the third periodicity ($d_3$) results from the interaction of the beams with the scale grating (13) and the scanning grating (24; 124; 224) in the detection plane, a plurality of mutually phase-shifted incremental signals being producible from scanning said periodic fringe pattern by means of the detector arrangement (26), and
- wherein the scanning grating (24; 124; 224) is arranged between at least one first and one second transparent, plate-shaped carrier element (25.1, 25,2; 125.1, 125.2; 225.1, 225.2) and the space between the scanning grating (24; 124; 224) and the detector regions (26.1 - 26.n) is completely filled with a material that has a refractive index n > 1.3, and
- wherein the distance ($u_1$) between the scale grating (13) and the adjacent interface (G1) of the first carrier element (25.1) is chosen in the range between 10 $\mu$m and 200 $\mu$m.

2. Position measuring device according to Claim 1, wherein the distance ($u_1$) between the scale grating (13) and the adjacent interface (G1) of the first carrier element (25.1) is chosen in the range between 20 $\mu$m and 50 $\mu$m.

3. Position measuring device according to Claim 1, wherein the plate-shaped carrier elements (25.1, 25,2; 125.1, 125.2; 225.1, 225.2) are formed from glass.

4. Position measuring device according to Claim 1, wherein the first plate-shaped carrier element is formed from glass and the second plate-shaped carrier element is formed from transparent plastic.

**5.** Position measuring device according to Claim 1, wherein the plate-shaped carrier elements (25.1, 25.2; 125.1, 125.2: 225.1, 225.2) at least have a thickness of 0.1 mm.

**6.** Position measuring device according to Claim 1, wherein the plate-shaped carrier elements (25.1, 25.2; 125.1, 125.2; 225.1, 225.2) have a maximum thickness of 5 mm.

**7.** Position measuring device according to at least one of the preceding claims, wherein the scanning grating (24; 124, 224) is arranged on one of the two interfaces (G2, G3) facing one another of the two carrier elements (25.1, 25.2; 125.1, 125.2; 225.1, 225.2).

**8.** Position measuring device according to Claim 7, wherein the scanning grating (24; 124) is embodied as an amplitude grating and has scanning grating regions (24a, 24b; 124.a, 124.b) with different optical transmissivities.

**9.** Position measuring device according to Claim 7, wherein the scanning grating (224) is embodied as a phase grating and has scanning grating regions (224.a, 224.8) with different optical phase deviations.

**10.** Position measuring device according to at least one of the preceding claims, wherein the following relationships apply to the first periodicity ($d_1$) of the scale grating (13) and the third periodicity ($d_3$) of the resultant fringe pattern in the detection plane:

$$d_1 = d_2 * ((u_1 + u_2/n_{u2}) + v/n_v)/(v/n_v)$$

$$d_3 = d_2 * ((u_1 + u_2/n_{u2}) + v/n_v)/(u_1 + u_2/n_{u2}),$$

where:

$d_1$ := first periodicity of the scale grating
$d_2$ := effective, second periodicity of the scanning grating
$d_3$ := third periodicity of the fringe pattern resulting in the detection plane
$u_1$ := distance between scale grating and adjacent interface of the first carrier element
$u_2$ := thickness of the first carrier element, placed between scale grating and scanning grating
$v$ := thickness of the second carrier element, placed between scanning grating and detection plane
$n_{u2}$ : = refractive index of the first carrier element
$n_v$ := refractive index of the second carrier element.

**Revendications**

**1.** Dispositif de mesure de position destinée à déterminer la position d'un premier objet par rapport à un deuxième objet mobile relativement à celui-ci le long d'au moins une direction de mesure (x), comprenant

- un étalon (10) qui s'étend le long de la direction de mesure (x), lequel est relié au premier objet et comporte au moins une grille d'échelle périodique (13), laquelle est réalisée sous la forme d'une grille de transmission et possède une première périodicité ($d_1$), et
- une unité de balayage (20) qui est reliée au deuxième objet, comprenant

- au moins une source de lumière (21),
- au moins une grille de balayage périodique (24 ; 124 ; 224) qui possède une deuxième périodicité ($d_2$), et
- un arrangement détecteur (26) qui se compose de zones de détecteur (26.1 - 26.n) sensibles au rayonnement dans un plan de détection, disposées périodiquement avec une troisième périodicité ($d_3$) le long de la direction de mesure (x), et

- les faisceaux de rayons émis par la source de lumière (21) sollicitant tout d'abord la grille d'échelle (13), traversent ensuite la grille de balayage (24 ; 124 ; 224), puis de l'interaction des faisceaux de rayons avec la grille d'échelle (13) et la grille de balayage (24 ; 124 ; 224) résulte un modèle de bandes périodique ayant la troisième périodicité ($d_3$), à partir duquel le balayage au moyen de l'arrangement détecteur (26) permet de générer plusieurs signaux incrémentaux mutuellement déphasés, et

- la grille de balayage (24 ; 124 ; 224) étant disposée entre au moins un premier et un deuxième élément porteur (25.1, 25.2 ; 125.1, 125.2 ; 225.1, 225.2) transparents en forme de plaque et l'espace entre la grille de balayage (24 ; 124 ; 224) et les zones de détecteur (26.1 - 26.n) étant entièrement rempli d'un matériau qui possède un indice de réfraction n > 1,3, et

- l'écart ($u_1$) entre la grille d'échelle (13) et la surface limite voisine (G1) du premier élément porteur (25.1) étant choisi dans la plage entre 10 μm et 200 μm.

**2.** Dispositif de mesure de position selon la revendication 1, l'écart ($u_1$) entre la grille d'échelle (13) et la surface limite voisine (G1) du premier élément porteur (25.1) étant choisi dans la plage entre 20 μm et 50 μm.

**3.** Dispositif de mesure de position selon la revendication 1, les éléments porteurs (25.1, 25.2 ; 125.1, 125.2 ; 225.1, 225.2) en forme de plaque étant réalisés en verre.

**4.** Dispositif de mesure de position selon la revendication 1, le premier élément porteur en forme de plaque étant réalisé en verre et le deuxième élément porteur en forme de plaque en matière plastique transparente.

**5.** Dispositif de mesure de position selon la revendication 1, les éléments porteurs (25.1, 25.2 ; 125.1, 125.2 ; 225.1, 225.2) en forme de plaque possédant une épaisseur d'au moins 0,1 mm.

**6.** Dispositif de mesure de position selon la revendication 1, les éléments porteurs (25.1, 25.2 ; 125.1, 125.2 ; 225.1, 225.2) en forme de plaque possédant une épaisseur maximale de 5 mm.

**7.** Dispositif de mesure de position selon au moins l'une des revendications précédentes, la grille de balayage (24 ; 124 ; 224) étant disposée sur l'une des deux surfaces limites (G2, G3) se faisant mutuellement face des deux éléments porteurs (25.1, 25.2 ; 125.1, 125.2 ; 225.1, 225.2).

**8.** Dispositif de mesure de position selon la revendication 7, la grille de balayage (24 ; 124) étant réalisée sous la forme d'une grille d'amplitude et possédant des zones de grille de balayage (24a, 24b ; 124.a, 124.b) ayant des transparences optiques différentes.

**9.** Dispositif de mesure de position selon la revendication 7, la grille de balayage (224) étant réalisée sous la forme d'une grille de phase et possédant des zones de grille de balayage (224.a, 224.8) ayant des excursions de phase différentes.

**10.** Dispositif de mesure de position selon au moins l'une des revendications précédentes, les relations suivantes s'appliquent à la première périodicité ($d_1$) de la grille d'échelle (13) et à la troisième périodicité ($d_3$) du modèle de bandes résultant dans le plan de détection :

$$d_1 = d_2 \cdot ((u_1 + u_2/n_{u2}) + v/n_v) / (v/n_v)$$

$$d_3 = d_2 \cdot ((u_1 + u_2/n_{u2}) + v/n_v) / (u_1 + u_2/n_{u2})$$

où

$d_1$ désigne la première périodicité de la grille d'échelle
$d_2$ désigne la deuxième périodicité effective de la grille de balayage
$d_3$ désigne la troisième périodicité du modèle de bandes résultant dans le plan de détection
$u_1$ désigne l'écart entre la grille d'échelle et la surface limite voisine du premier élément porteur
$u_2$ désigne l'épaisseur du premier élément porteur, placé entre la grille d'échelle et la grille de balayage
$v$ désigne l'épaisseur du deuxième élément porteur, placé entre la grille de balayage et le plan de détection
$n_{u2}$ désigne l'indice de réfraction du premier élément porteur
$n_v$ désigne l'indice de réfraction du deuxième élément porteur.

Fig. 1

$d_1$

13a  13b

13

Fig. 2a

$d_2$

24a  24b

24

Fig. 2b

$d_3$

25

26.1  26  26.n

Fig. 2c

Fig. 3

Fig. 4

Fig. 5a

Fig. 5b

EP 3 355 034 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3210614 C2

- EP 0350586 A2

**In der Beschreibung aufgeführte Nicht-Patentliteratur**

- **R. PETTIGREW.** Analysis of Grating Imaging and its Application to Displacement Metrology. *SPIE Vol. 36, 1st European Congress on Optics applied to Metrology,* 1977, vol. 36, 325-332

- **R. PETTIGREW.** Analysis of Grating Imaging and its Application to Displacement Metrology. *SPIE Vol. 36, 1st European Congress on Optics applied to Metrology,* 1977, vol. 36, 325-33